Europäisches Patentamt

**European Patent Office**

**Office européen des brevets**

(19)

(11) Publication number: **0 102 309**

**A1**

# (12) EUROPEAN PATENT APPLICATION

(21) Application number: **83630113.5**

(22) Date of filing: **04.07.83**

(51) Int. Cl.³: **F 16 D 65/04**
**B 61 H 1/00, F 16 D 69/04**

(30) Priority: **11.08.82 US 407025**

(43) Date of publication of application:
**07.03.84 Bulletin 84/10**

(84) Designated Contracting States:
**AT BE CH DE FR GB IT LI NL SE**

(71) Applicant: **ABEX CORPORATION**
**530 Fifth Avenue**
**New York New York 10036(US)**

(72) Inventor: **Larusso, Thomas J.**
**101 Mountain Circle**
**West Milford New Jersey 07480(US)**

(72) Inventor: **Susen, Kenneth S.**
**1016 Colfax Avenue**
**Pompton Lakes New Jersey 07480(US)**

(74) Representative: **Weydert, Robert et al,**
**Office Dennemeyer S.à.r.l. 21-25 Allée Scheffer P.O. Box 41**
**L-2010 Luxembourg(LU)**

(54) Brake shoe back lug attachment.

(57) A lug (26) is attached to a sintered metallic brake shoe (20) by embedding the legs (44) of the lug directly into the friction element (22) during hot pressing. In one embodiment, the lug legs project into back plate slots (28) and corresponding friction material depressions (29) before hot pressing. The lug legs (44) are completely surrounded by the friction material during hot pressing. In another embodiment, the lug legs are pressed directly through the back plate and into the friction material during hot forming.

FIG. 2

FIG. 6

Croydon Printing Company Ltd.

0102309

BRAKE SHOE BACK PLATE LUG ATTACHMENT

BACKGROUND OF THE INVENTION

This invention relates generally to railroad brake shoes and, more specifically, to the attachment of a lug to a brake shoe.

Conventionally, railroad brake shoes use one of two types of friction material -- cast iron or a composition material. In a composition shoe, such as shown in USPN 2,948,361, the brake shoe lug is conventionally attached to the brake shoe by clinching lug tangs to the underside of the back plate before the composition friction material is attached to the back plate.

Recently, a new type of brake shoe has been developed to replace the composition shoe. This shoe features a sintered metallic friction material, such as that disclosed in Assignee's copending Application Serial No. 316,652, filed November 2, 1981.

In the manufacture of such shoe, a sintered metallic mix is cold formed with the back plate to produce a cold compact which is then heated and hot pressed. Attempts to produce a shoe which has the lug attached to the back plate before cold forming have proved to be impractical, since no way has been found to prevent collapse of the heated lug during the hot pressing process. Thus, a separate lug has been welded to the back plate after the hot pressed brake shoe has cooled. This method of attachment has been found to be time consuming and expensive. Thus, it is the object of this invention to find a better method of attaching a lug to a sintered metallic brake shoe.

SUMMARY OF THE INVENTION

In one form, this invention comprises providing a pair of spaced slots in a back plate which mate with depressions in the friction material which are formed during cold pressing. The cold compact is then heated to a high temperature and placed in a die containing the cold lug. During the hot pressing step, lug legs are pressed through the back plate slots and into intimate contact with the hot friction material. In another form of the invention, no slots or depressions are formed in the back plate or cold friction material and the cold lug legs are pressed directly through the hot back plate and into the hot friction material during hot pressing.

DESCRIPTION OF THE DRAWINGS

Further objects, features and advantages of this invention will become more readily apparent upon reference to the following detailed description of the invention, as shown in the acccompanying drawings, in which:

Fig. 1 is a perspective view of a prior art brake shoe;

Fig. 2 is a perspective view of a brake shoe having a lug attached according to this invention;

Fig. 3 is a perspective view of a brake shoe and back plate cold compact, according to one embodiment of this invention;

Fig. 4 is a perspective view of a die used in forming the cold compact shown in Fig. 3;

Fig. 5 is a perspective view of a die used to attach a lug to a brake shoe during hot pressing, in accordance with this invention;

Fig. 6 is a detail view of a lug having its legs inserted through the back plate slots and into the depressions in the friction material prior to hot pressing, according to one embodiment of this invention;

Fig. 7 is a detail view similar to that of Fig. 6, but shown upon completion of hot pressing;

Fig. 8 is a detail view of a lug prior to insertion of its legs into the friction material according to another embodiment of this invention; and

Fig. 9 is a detail view similar to Fig. 8, but shown upon completion of hot pressing.

## DETAILED DESCRIPTION OF THE INVENTION

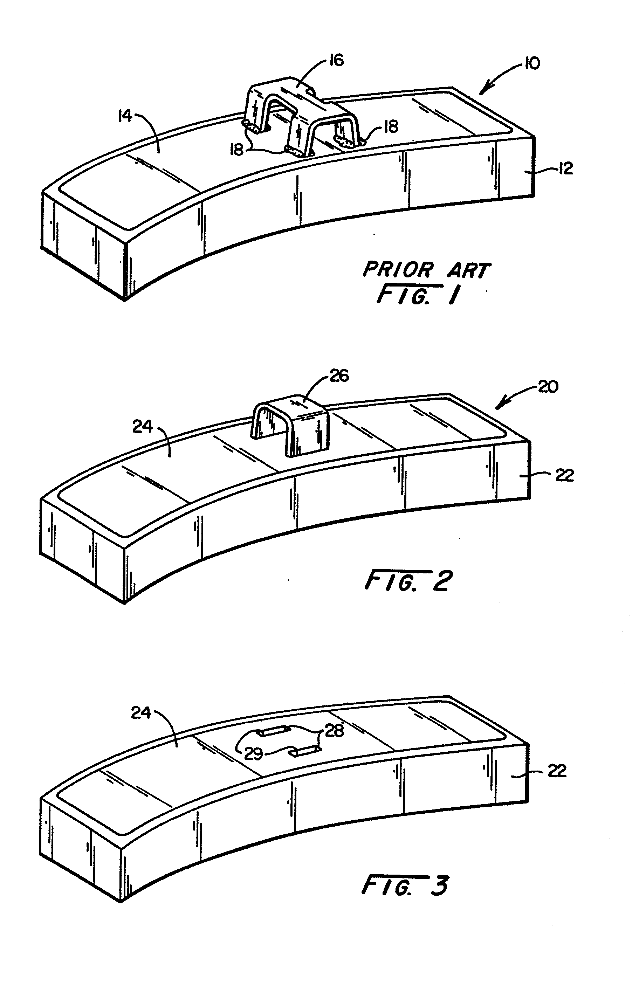

Referring now to Fig. 1, a prior art railroad brake shoe 10 comprises a sintered metallic friction element 12 mounted on a steel back plate 14. A lug 16 (for attaching the brake shoe to a brake head) has four legs which are attached by welding at 18 to the back plate.

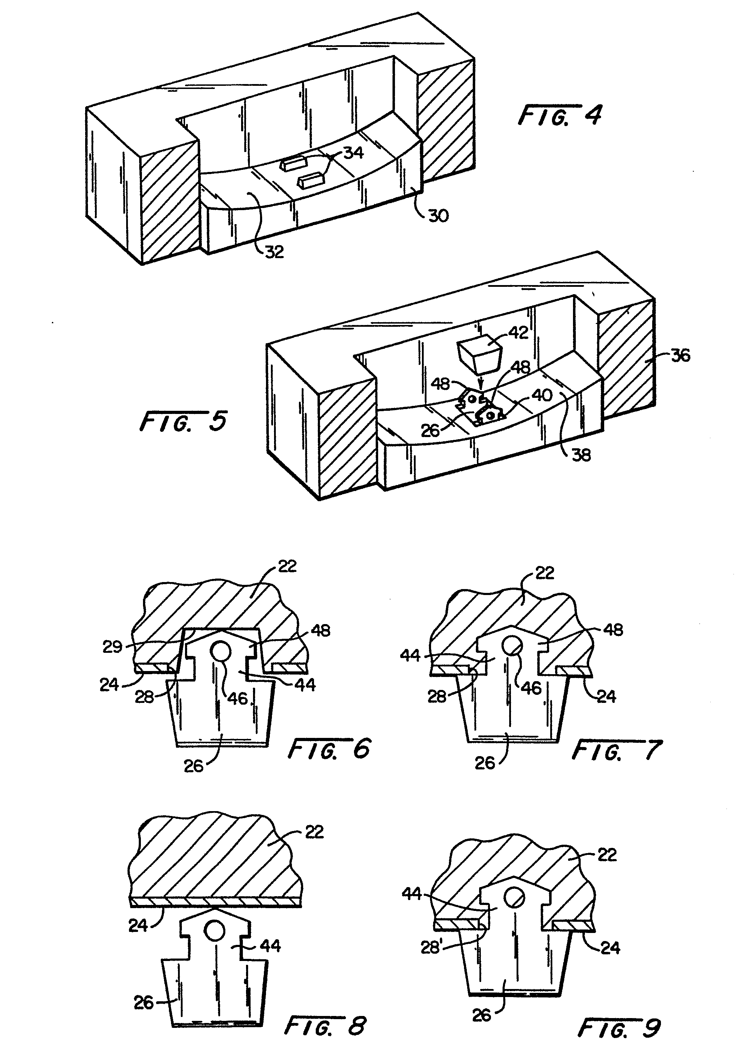

Fig. 2 shows a brake shoe 20 according to this invention which comprises a sintered metallic friction element 22 mounted on a steel back plate 24 and a lug 26. A cold compact according to one embodiment of this invention is shown in Fig. 3. Here the back plate 24 has a pair of spaced slots 28 formed therein which register with depressions 29 in the friction material. To form this cold compact, back plate 24 is mounted in a cold forming die 30, shown in Fig.4, having a curved bottom surface 32 and a pair of protuberances 34 which extend through slots 28. An iron-base, metal powder mix is then placed on top of the back plate 24 and compressed at a pressure of approximately 1240 bar to produce the cold compact of Fig. 3. The protuberances 34 form depressions 29 in the friction material during this operation.

The cold compact of Fig. 3 is next placed in an oven and heated to 870-1100$^{\circ}$C. The next processing step uses a hot pressing die 36 which has a curved bottom surface 38 having a depression 40, shown in Fig. 5. A lug 26 is placed in depression 40 and a plug 42 is placed over it so that its top surface is flush with surface 38. The hot compact is then taken from the oven and placed in the die and the entire assembly is pressed at approximately 1240 bar. Fig. 6 shows the relationship of the lug 26 to the hot compact 22,24 just prior to pressing, with the legs 44, which include a hole 46 and tangs 48, extending into depressions 29. After pressing, the lug 26 is firmly secured in the friction material 22, as shown in Fig. 7. The hole 46 and tangs 48 provide a mechanical interlock between the lug and friction material.

Figs. 8 and 9 show another embodiment of the invention. In this embodiment, the slots 28 are eliminated from the back plate 24 and the protuberances 34 are eliminated from the cold forming die 30 so that the cold compact has no slots or depressions.    Fig. 8 illustrates the assembly just prior to hot pressing.    It has been found that during hot pressing, the legs 44 of the cold lug 26 will penetrate the steel back plate 24, forming slots 28 therein, and embed themselves into the friction material 22, as shown in Fig. 9.    This further simplifies the manufacturing operation.

Thus, this invention provides improved means for inexpensively and securely attaching a lug to a sintered metallic friction material brake shoe.

CLAIMS

1. A railroad brake shoe comprising: a steel back plate, a hot pressed sintered metallic friction material element mounted on the back plate, and a lug extending from the back plate for attaching the brake shoe to a brake head, characterized by the back plate having a pair of spaced slots formed therein and the lug including a pair of spaced legs extending through the spaced slots and into the body of the friction material element to secure the lug to the brake shoe.

2. The railroad brake shoe of claim 1, further characterized by the lug legs being pressed into the friction material element during the hot pressing of the brake shoe.

3. The railroad brake shoe of claim 2, further characterized by the back plate slots being formed by pressing the lug legs through the back plate and into the friction material element during the hot pressing of the brake shoe.

PRIOR ART
FIG. 1

FIG. 2

FIG. 3

0102309

2/2

FIG. 4

FIG. 5

FIG. 6

FIG. 7

FIG. 8

FIG. 9

## EUROPEAN SEARCH REPORT

European Patent Office

## DOCUMENTS CONSIDERED TO BE RELEVANT

| Category | Citation of document with indication, where appropriate, of relevant passages | Relevant to claim |
|---|---|---|
| A | US-A-2 970 675 (BIGGS) | |
| A,D | US-A-2 948 361 (POGUE) | |
| A | DE-B-1 233 547 (JURID) | |
| A | EP-A-0 055 205 (ABEX) | |
| A | US-A-2 331 563 (MURPHY) | |

----

**CLASSIFICATION OF THE APPLICATION (Int. Cl. ³)**

F 16 D 65/04
B 61 H 1/00
F 16 D 69/04

**TECHNICAL FIELDS SEARCHED (Int. Cl. ³)**

F 16 D 65/04
F 16 D 65/06
F 16 D 65/02
F 16 D 69/02
B 61 H 1/00

The present search report has been drawn up for all claims

| Place of search | Date of completion of the search | Examiner |
|---|---|---|
| THE HAGUE | 14-11-1983 | HARTEVELD C.D.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82